Europäisches Patentamt

European Patent Office

Office européen des brevets

(11) Veröffentlichungsnummer: **0 252 249**
A2

# EUROPÄISCHE PATENTANMELDUNG

(21) Anmeldenummer: 87106942.3

(22) Anmeldetag: 13.05.87

(51) Int. Cl.³: **B 04 C 5/22**
**B 29 B 17/00**

(30) Priorität: 10.07.86 DE 3623268

(43) Veröffentlichungstag der Anmeldung:
13.01.88 Patentblatt 88/2

(84) Benannte Vertragsstaaten:
AT FR GB IT

(71) Anmelder: Windmöller & Hölscher
Münsterstrasse 50
D-4540 Lengerich(DE)

(72) Erfinder: Klose, Rainer
Zum Igelbach 10
D-4540 Lengerich(DE)

(74) Vertreter: Gossel, Hans K., Dipl.-Ing. et al,
Rechtsanwälte E. Lorenz - B. Seidler M. Seidler - Dipl.-Ing.
H.K. Gossel Dr. I. Philipps - Dr. P.B. Schäuble Dr. S.
Jackermeier - Dipl.-Ing. A. Zinnecker
Widenmayerstrasse 23 D-8000 München 22(DE)

(54) Vorrichtung zum Zuführen von zerkleinerten Kunststofffolienabfällen o.dgl. zu dem Aufgabetrichter eines Extruders.

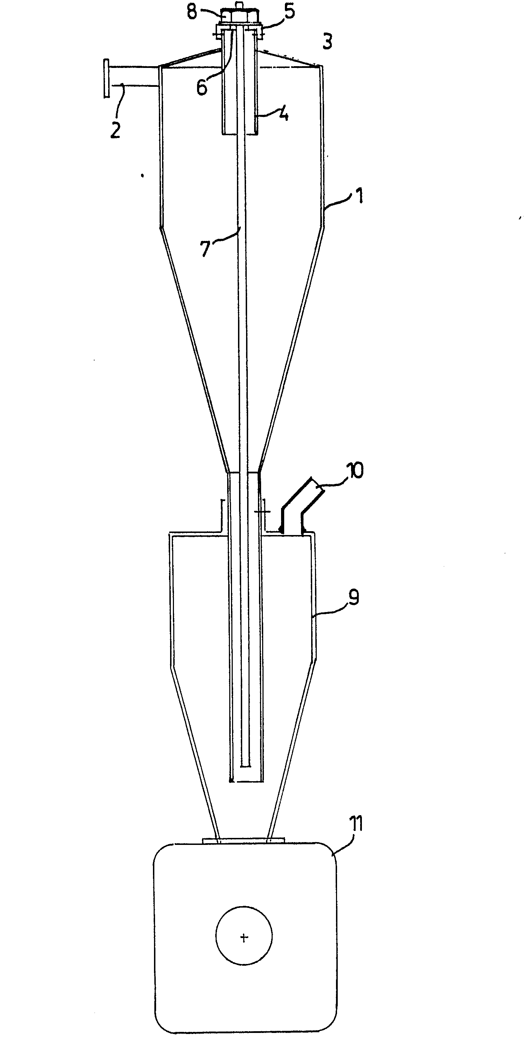

(57) Eine Vorrichtung dient zum Zuführen von zerkleinerten Folienabfällen oder dergleichen aus thermoplastischem Kunststoff zu dem Aufgabetrichter (9) eines Extruders. Ein mit einem Fördergebläse versehenes Förderrohr (2) mündet in einen Zyklonabscheider (1), der in seiner Deckelplatte ein Entlüftungsrohr (4) aufweist, dessen Mittellinie mit der Achse des Zyklonabscheiders fluchtet. Damit die Gefahr des Verstopfens des Zyklonabscheiders (1) vermieden oder zumindest stark verringert ist, ist in dem Entlüftungsrohr (4) oder einer entsprechenden Entlüftungsöffnung eine Stange (7) geringeren Durchmessers pendelnd aufgehängt, deren unterer Endbereich in das vertikale Austrittsrohr des Zyklonabscheiders (1) hineinragt (einzige Figur).

EP 0 252 249 A2

./...

10. Juli 1986
34 777   G-kl

Windmöller & Hölscher,
4540 Lengerich

## Vorrichtung zum Zuführen von zerkleinerten Kunststoffolienabfällen o. dgl. zu dem Aufgabetrichter eines Extruders

Die Erfindung betrifft eine Vorrichtung zum Zuführen von zerkleinerten Folienabfällen o. dgl. aus thermoplastischem Kunststoff
zu dem Aufgabetrichter eines Extruders mit einem mit einem Fördergebläse versehenen Förderrohr, daß in einen Zyklonabscheider
mündet, der in seiner Deckelplatte ein Entlüftungsrohr aufweist,
dessen Mittellinie mit der Achse des Zyklonabscheiders fluchtet.

Bei der Herstellung von extrudierten Kunststoffprodukten werden
üblicherweise anfallende Kunststoffabfälle zerkleinert und wieder in den Aufgabetrichter des Extruders eingespeist. Insbesondere bei der Kunststoffolienherstellung fallen beispielsweise
durch das Besäumen von extrudierten Flachfolien Randstreifen als Abfall an, die anschließend zerkleinert und mit oder Vermischung mit Kunststoffgranulat wieder in den Aufgabetrichter des Extruders eingeleitet werden.

Das Einspeisen von Kunststoffabfällen, insbesondere von Kunststoffolienschnitzeln, in den Aufgabetrichter von Extrudern bereitet nun gewisse Schwierigkeiten, da derartige Kunststoffabfälle nicht rieselfähig sind, aneinander haften können und in den trichterförmigen Zuführungseinrichtungen zu Brückenbildungen neigen und daher Verstopfungen verursachen können.

Um Brückenbildungen bei Aufgabe von Folienschnitzeln in den Einfülltrichter eines Extruders zu vermeiden, sind in diesem bei einer aus der DE-AS 25 18 127 bekannten Vorrichtung Leitbleche angeordnet.

Erfolgt die Zuführung der zerkleinerten Kunststoffabfälle, vorzugsweise der Folienschnitzel, durch mit Blasluft beaufschlagte Förderrohre, wird üblicherweise ein Zyklonabscheider zum Trennen der Förderluft von dem Fördergut vorgesehen. Eine derartige Vorrichtung der eingangs angegebenen Art ist aus der DE-PS 28 37135 bekannt.

Zyklonabscheider weisen unterhalb eines zylindrischen Behälterabschnitts, der mit dem tangentialen Zuführungsrohr versehen ist, einen sich konus- oder trichterförmig verengenden Behälterabschnitt auf. In diesem sich konusförmig verengenden Behälterabschnitt können besonders leicht Verstopfungen durch Brückenbildungen auftreten, insbesondere wenn das eingeblasene Material aus Schnitzeln besteht, die zum Verkleben miteinander oder mit Paraffin und Staub neigen. Treten Brückenbildungen und Verstopfungen in dem Zyklonabscheider auf, ist nicht nur eine ordnungsgemäße Zufuhr der Kunststoff- oder Kunststoffolienabfälle unterbrochen, es ist darüberhinaus auch ein zeitraubendes Säubern des

- 3 -

Zyklonabscheiders erforderlich, das häufig mit einer Demontage verbunden ist.

Aufgabe der Erfindung ist es daher, eine Vorrichtung der eingangs angegebenen Art zu schaffen, bei der die Gefahr des Verstopfens des Zyklonabscheiders vermieden oder zumindest stark verringert ist.

Erfindungsgemäß wird diese Aufgabe bei einer Vorrichtung der gattungsgemäßen Art dadurch gelöst, daß in dem Entlüftungsrohr oder einer entsprechenden Entlüftungsöffnung eine Stange geringeren Durchmessers pendelnd aufgehängt ist, deren unterer Endbereich in das vertikale Austrittsrohr des Zyklonabscheiders hineinragt. In der erfindungsgemäßen Vorrichtung gerät die pendelnd aufgehängte Stange durch den in den Zyklonabscheider eintretenden Luftstrom und das eingeblasene Material in Bewegung oder sogar in eine pendelnde Drehbewegung, so daß Brückenbildungen wirksam vermieden werden und das in den Zyklonabscheider eingeblasene Material kontinuierlich und gleichmäßig absinkt und durch das Austrittsrohr austritt.

Zweckmäßigerweise ist der obere Rand des Entlüftungsrohrs oder der Entlüftungsöffnung von einer Lasche oder einem diese nur teilweise abdeckenden Blech übergriffen, das eine zentrale Bohrung aufweist, die die Stange mit Spiel durchsetzt, wobei die Stange an ihrem oberen Ende einen verbreiterten Kopf trägt, der auf dem Rand der Bohrung abgestützt ist. Der Kopf kann aus einer aufgeschraubten Mutter bestehen.

In weiterer Ausgestaltung der Erfindung ist vorgesehen, daß das Austrittsrohr des Zyklonabscheiders eine den Aufgabetrichter abschließende Deckelplatte durchsetzt und daß die Deckelplatte oder der Aufgabetrichter mit einem Granulatzuführungsrohr versehen ist. Da durch das Austrittsrohr die Kunststoffabfälle oder Folienschnitzel gleichmäßig in den Aufgabetrichter eintreten, lassen sich diese in guter Weise mit dem durch das Granulatzuführungsrohr zugeführten Granulat vermischen.

Ein Ausführungsbeispiel der Erfindung wird nachstehend anhand der Zeichnung näher erläutert, in deren einziger Figur ein Längsschnitt durch einen Aufgabetrichter mit aufgesetztem Zyklonabscheider schematisch dargestellt ist.

Auf den Einfülltrichter 9 des Extruders 11 ist in der dargestellten Weise ein Zyklonabscheider 1 aufgesetzt. Dieser Zyklonabscheider besteht aus einem Behälter mit einem oberen zylindrischen Abschnitt, an den ein unterer, sich konusförmig verengender Behälterabschnitt anschließt. Der obere zylindrische Behälterabschnitt ist durch einen aufgesetzten Deckel 3 geschlossen, der in üblicher Weise in seiner Mitte mit einem Rohrstück 4 versehen ist, das nach unten in den Zyklonabscheider hineinragt. An seinem oberen Randbereich ist der zylindrische Behälterteil mit einem tangentialen Anschlußstutzen 2 versehen, der der Aufgabe des eingeblasenen Materials dient.

Der untere konische Behälterteil ist durch ein Austrittsrohr fortgesetzt, das die obere Deckelplatte des Einfülltrichters 9 mittig durchsetzt und an dieser befestigt ist.

Das den Deckel 3 des Zyklonabscheiders durchsetzende Rohrstück 4 ist oben offen und mit einem dessen Oberseite übergreifenden Flacheisen 5 versehen, dessen abgewinkelte Schenkel an dem Mantel des Rohrstücks 4 befestigt sind. Das Flacheisen 5 weist in seiner Mitte eine Durchgangsbohrung 6 auf. Diese Durchgangsbohrung 6 durchsetzt eine Rundstange 7, die bis in das Austrittsrohr des Zyklonabscheiders 1 hineinragt. Der Durchmesser der Durchgangsbohrung 6 des Flacheisens 5 ist größer als der Durchmesser der Rundstange 7.

0252249

- 5 -

Oberhalb des Flacheisens 5 weist die Stange ein Gewinde auf,
auf das eine selbsthemmende Mutter 8 aufgeschraubt ist. Da die
Stange 7 in ihrem Durchmesser kleiner ist als die Durchgangsbohrung 6, wird diese durch die in den Zyklonabscheider eintretende
Druckluft sowie die eingeblasenen Abfallschnitzel in eine pendelnde oder auch kreisende Bewegung versetzt. Diese pendelnde
Bewegung verhindert, daß sich Schnitzel, insbesondere im unteren
schmaler werdenden Bereich des Zyklonabscheiders, festsetzen und
sich dort stauen. Die Schnitzel werden gleichmäßig von dem in
den Einfülltrichter 9 über den Anschlußrohrstutzen 10 eingespeisten Granulat mitgenommen und dem Extruder 11 zugeführt.

Das Flacheisen 5 ist relativ schmal, so daß die durch den Eintrittsstutzen 2 eingeblasene Druckluft über das Rohr 4 nach
außen entweichen kann.

10. Juli 1986
34 777   G-kl

Windmöller & Hölscher,
4540 Lengerich

---

Vorrichtung zum Zuführen von zerkleinerten
Kunststoffolienabfällen o. dgl. zu dem
Aufgabetrichter eines Extruders

---

Patentansprüche:

1.  Vorrichtung zum Zuführen von zerkleinerten Folienabfällen
    o. dgl. aus thermoplastischem Kunststoff zu dem Aufgabetrichter eines Extruders mit einem mit einem Fördergebläse versehenen Förderrohr, das in einen Zyklonabscheider
    mündet, der in seiner Deckelplatte ein Entlüftungsrohr
    aufweist, dessen Mittellinie mit der Achse des Zyklonabscheiders fluchtet,

    dadurch gekennzeichnet,

    daß in dem Entlüftungsrohr (4) oder einer entsprechenden
    Entlüftungsöffnung eine Stange (7) geringeren Durchmessers
    pendelnd aufgehängt ist, deren unterer Endbereich in das
    vertikale Austrittsrohr des Zyklonabscheiders (1) hineinragt.

2. Vorrichtung nach Anspruch 1, dadurch gekennzeichnet, daß der obere Rand des Entlüftungsrohrs (4) oder der Entlüftungsöffnung von einer Lasche (5) oder einem diese nur teilweise abdeckenden Blech übergriffen ist, das eine zentrale Bohrung (6) aufweist, die die Stange (7) mit Spiel durchsetzt, und daß die Stange (7) an ihrem oberen Ende einen verbreiterten Kopf trägt, der auf dem Rand der Bohrung (6) abgestützt ist.

3. Vorrichtung nach Anspruch 2, dadurch gekennzeichnet, daß der Kopf aus einer aufgeschraubten Mutter (8) besteht.

4. Vorrichtung nach einem der Ansprüche 1 bis 3, dadurch gekennzeichnet, daß das Austrittsrohr des Zyklonabscheiders (1) eine den Aufgabetrichter (9) abschließende Deckelplatte durchsetzt und daß die Deckelplatte oder der Aufgabetrichter mit einem Granulatzuführungsrohr (10) versehen ist.

0252249